# EUROPEAN PATENT APPLICATION

(11) **EP 4 779 176 A1**
(43) Date of publication of application: **22.07.2026**
(21) Application number: 24888380.3
(22) Date of filing: 06.09.2024
(51) Int. Cl.: F16H 57/02, B60K 17/12

(54) **VEHICLE DRIVE DEVICE**

(30) Priority: 10.11.2023 JP 2023192416
(71) Applicant: AISIN CORPORATION, Kariya-shi, Aichi 448-8650 (JP)
(72) Inventor: MUTSUURA, Keita, Kariya-shi, Aichi 448-8650 (JP); TAKEMOTO, Keisuke, Kariya-shi, Aichi 448-8650 (JP); KOASHI, Hidefumi, Kariya-shi, Aichi 448-8650 (JP)
(74) Representative: Kramer Barske Schmidtchen Patentanwälte PartG mbB
(86) International application number: PCT/JP2024/032004
(87) International publication number: WO 2025/100078

(57) **Abstract**

In a vehicle drive device (1), a case 9 has, in an internal accommodation space, a side region (E4) that is a region on an axis-orthogonal direction first side (Y1) with respect to a rotation electric machine (8) in an onboard state, that does not overlap the rotation electric machine (8) when viewed in an up-down direction (Z), and that overlaps an offset gear mechanism (3) when viewed in an axial direction. At least a part of a power supply module (7) is disposed on an upper side (Z1) with respect to the rotation electric machine (8) and at a position overlapping the rotation electric machine (8) when viewed in the up-down direction (Z), and at least a part of an inverter module (5) is disposed in the side region (E4).

## Description

### Technical Field

This disclosure relates to a vehicle drive device.

### Background Art

JP2021-48748A discloses a vehicle drive device in which a rotation electric machine (11A) serving as a drive force source of wheels, a transmission (12) that transmits power from the rotation electric machine (11A) to an output shaft (15), a power module (25) that is supplied with high-voltage DC power from a battery and drives the rotation electric machine (11A), a ECU (26) that controls the power module (25), and a voltage converter (29) that steps down the high-voltage DC power supplied from the battery and supplies low-voltage DC power to the ECU (26) are accommodated in a case (13) (in the background art, the reference signs in parentheses are those of the reference document). The power module (25) and the ECU (26) together with a capacitor module (27) that smooths the DC power from the battery further constitute a power drive unit (28). The power drive unit (28) is accommodated in a first accommodation chamber (21) in the case (13), and the voltage converter (29) is accommodated in a second accommodation chamber (22) in the case (13). The first accommodation chamber (21) is provided above the rotation electric machine (11A) at a position overlapping the rotation electric machine (11A) and not overlapping the transmission (12) when viewed in an up-down direction, and the second accommodation chamber (22) is provided above the rotation electric machine (11A) and on the side of the first accommodation chamber (21) at a position not overlapping the rotation electric machine (11A) or the transmission (12) when viewed in the up-down direction.

### Citation List

### Patent Literature

PTL 1: JP2021-48748A

### Summary of Invention

### Technical Problem

When both the first accommodation chamber (21) and the second accommodation chamber (22) are provided above the rotation electric machine (11A) as described above, there may be a limitation on miniaturization of the case (13), that is, miniaturization of the vehicle drive device. In particular, a dimension of the vehicle drive device in the up-down direction tends to increase, which tends to hinder miniaturization.

In view of the above background, it is desired to further miniaturize a vehicle drive device including a rotation electric machine, an output member, a power transmission mechanism that transmits a drive force between the rotation electric machine and the output member, a circuit module that drivingly controls the rotation electric machine, and a power supply module.

### Solution to Problem

In view of the above, a vehicle drive device includes: a rotation electric machine including a rotor; an output member drivingly coupled to a wheel; a power transmission mechanism configured to transmit a drive force between the rotation electric machine and the output member; an inverter module configured to drivingly control the rotation electric machine; a power supply module electrically connected to an onboard battery; and a case that accommodates the rotation electric machine and the power transmission mechanism, in which a direction along a rotor axis that is a rotation axis of the rotor is defined as an axial direction, a direction along a vertical direction in an onboard state of being mounted on a vehicle is defined as an up-down direction, a direction orthogonal to the rotor axis when viewed in the up-down direction is defined as an axis-orthogonal direction, and one side of the axis-orthogonal direction is defined as an axis-orthogonal direction first side, an output axis that is a rotation axis of the output member is disposed coaxially with the rotor axis, the power transmission mechanism includes an offset gear mechanism disposed on an offset axis located on the axis-orthogonal direction first side with respect to the rotor axis and the output axis, the case has, in an internal accommodation space, a side region that is a region on the axis-orthogonal direction first side with respect to the rotation electric machine in the onboard state, that does not overlap the rotation electric machine when viewed in the up-down direction, and that overlaps the offset gear mechanism when viewed in the axial direction, at least a part of the power supply module is disposed on an upper side with respect to the rotation electric machine and at a position overlapping the rotation electric machine when viewed in the up-down direction, and at least a part of the inverter module is disposed in the side region.

According to this configuration, the power supply module is disposed on the upper side with respect to the rotation electric machine, and the inverter module is disposed in the side region located on the axis-orthogonal direction first side with respect to the rotation electric machine. That is, compared to a configuration in which both the inverter module and the power supply module are disposed, for example, on the upper side with respect to the rotation electric machine, it is easy to reduce the size of the vehicle drive device in the up-down direction. In addition, by disposing the offset gear mechanism, the inverter module can be disposed using a dead space that is likely to be generated on the axis-orthogonal direction first side with respect to the rotation electric machine. Therefore, it is easy to limit an increase in size of the vehicle drive device due to including the rotation electric machine, the output member, the power transmission mechanism, the inverter module, and the power supply module. That is, according to this configuration, the vehicle drive device including the rotation electric machine, the output member, the power transmission mechanism that transmits the drive force between the rotation electric machine and the output member, the circuit module that drivingly controls the rotation electric machine, and the power supply module can be implemented to be smaller.

Additional features and advantages of the vehicle drive device will become apparent from the following description of the exemplary and non-limiting embodiment described with reference to the drawings.

### Brief Description of Drawings

[FIG. 1] FIG. 1 is a schematic exploded perspective view of a vehicle drive device;
[FIG. 2] FIG. 2 is a skeleton diagram of the vehicle drive device;
[FIG. 3] FIG. 3 is a schematic circuit block diagram of the vehicle drive device;
[FIG. 4] FIG. 4 is a diagram schematically showing an arrangement of each part when viewed in an axial direction;
[FIG. 5] FIG. 5 is a diagram schematically showing the arrangement of each part when viewed in an axis-orthogonal direction; and
[FIG. 6] FIG. 6 is a schematic top view of the vehicle drive device with a cover member removed.

### Description of Embodiments

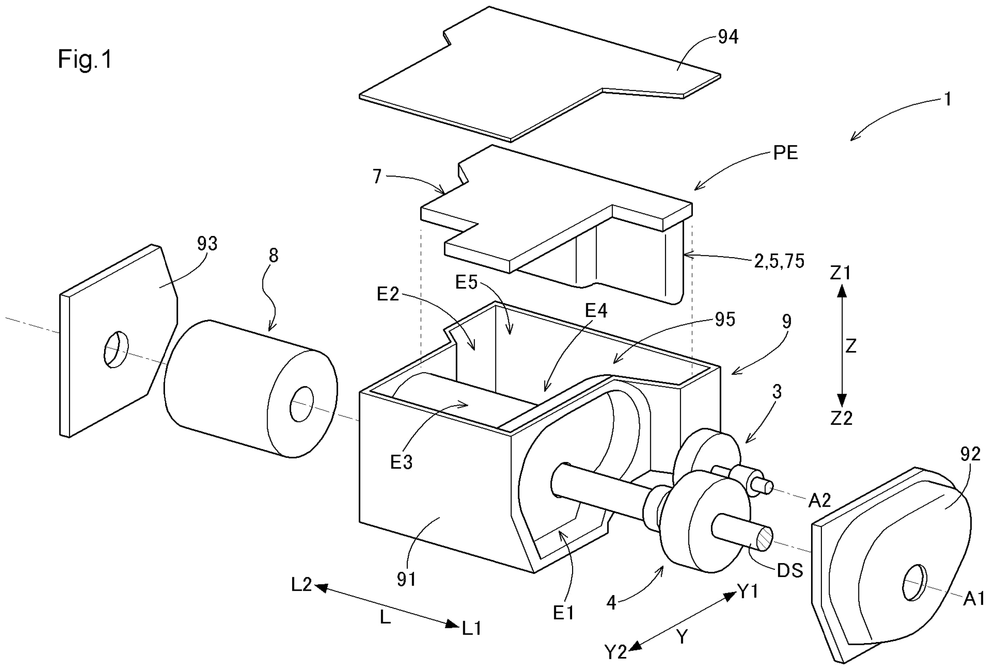

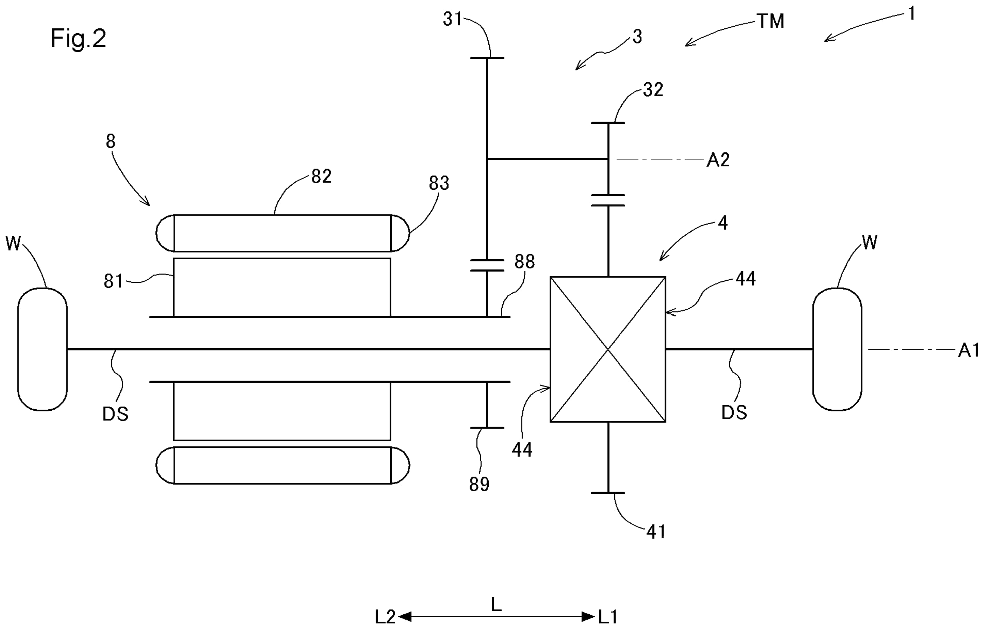

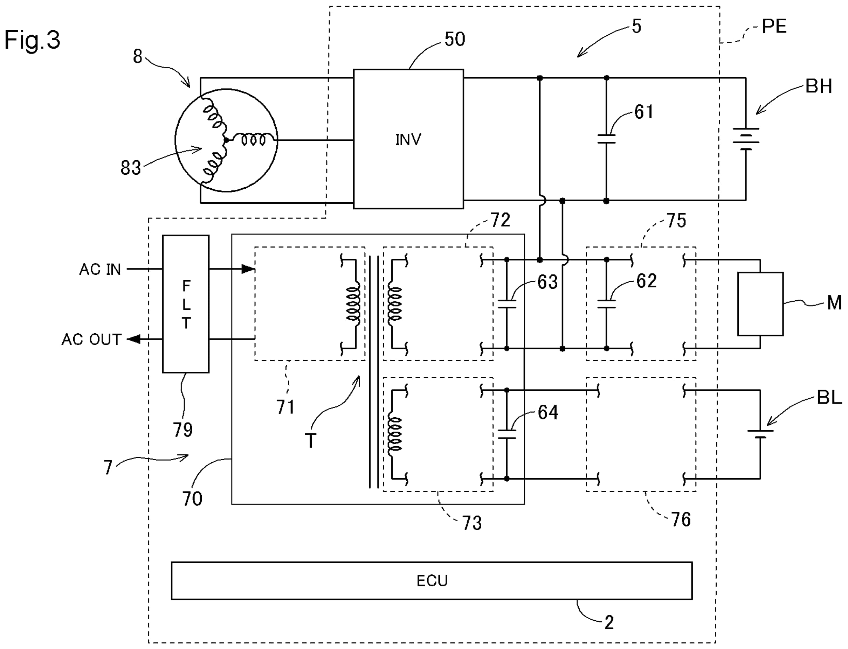

Hereinafter, an embodiment of a vehicle drive device will be described with reference to the drawings. FIG. 1 is a schematic exploded perspective view of a vehicle drive device 1, FIG. 2 is a skeleton diagram of the vehicle drive device 1, and FIG. 3 is a schematic circuit block diagram of the vehicle drive device 1. As shown in FIGS. 1 and 2, the vehicle drive device 1 includes a rotation electric machine 8 including a rotor 81, output members (a drive shaft DS and a differential side gear 44) drivingly coupled to wheels W, a power transmission mechanism TM that transmits a drive force between the rotation electric machine 8 and the output members, an inverter module 5, a power supply module 7, and a case 9. The inverter module 5 is a circuit module that drivingly controls the rotation electric machine 8. The power supply module 7 is a power electronics circuit module electrically connected to an onboard battery (high-voltage battery BH). The case 9 for accommodating the rotation electric machine 8 and the power transmission mechanism TM accommodates at least the rotation electric machine 8, the power transmission mechanism TM, and the inverter module 5, and further accommodates the power supply module 7 in the embodiment exemplified below. The case 9 includes a case body 91, a first side cover 92, a second side cover 93, and an upper cover 94. An accommodation space is formed in a space surrounded by the case body 91, the first side cover 92, the second side cover 93, and the upper cover 94.

In the present specification, the term "drivingly coupled" refers to a state in which two rotation components are coupled such that a drive force can be transmitted, and includes a state in which the two rotation components are coupled to rotate integrally or a state in which the two rotation components are coupled such that a drive force can be transmitted via one or two or more transmission members (shafts, gear mechanisms, belts, chains, or the like). Further, the transmission member may include an engagement device (a friction engagement device, a meshing type engagement device, and the like) that selectively transmits the rotation and the drive force. The term "rotate integrally" refers to integrally rotating whether separable or non-separable. Further, in the present specification, "overlapping in a specific direction view" relating to an arrangement of two components means that when a virtual straight line parallel to a visual line direction is moved in directions each orthogonal to the virtual straight line, there is at least a part of a region in which the virtual straight line intersects with both of the two components.

In the embodiment, a direction along a rotor axis (first axis A1) that is a rotation axis of the rotor 81 is defined as an axial direction L. One side in the axial direction L is defined as an axial direction first side L1, and the other side is defined as an axial direction second side L2. In addition, in the embodiment, a direction along a vertical direction in a state (onboard state) of being mounted on a vehicle in a standard posture is defined as an up-down direction Z, an upper side in the up-down direction Z is defined as an upper side Z1, and a lower side is defined as a lower side Z2. In other words, the up-down direction Z is one direction in the vehicle drive device 1, and coincides with the vertical direction when the vehicle drive device 1 is mounted on the vehicle in the standard posture. Therefore, when the vehicle drive device 1 is mounted on the vehicle while being inclined with respect to the standard posture, the up-down direction Z may not coincide with the vertical direction. The inclination angle is not prevented from exceeding 90 degrees. Further, a direction orthogonal to the rotor axis (first axis A1) when viewed in the up-down direction Z is defined as an axis-orthogonal direction Y, one side in the axis-orthogonal direction Y is defined as an axis-orthogonal direction first side Y1, and the other side is defined as an axis-orthogonal direction second side Y2.

As shown in the skeleton diagram of FIG. 2, the rotation electric machine 8 is an inner rotor type rotation electric machine including a stator 82 fixed to the case 9 and the rotor 81 disposed on an inner side of the stator 82 in a radial direction. A stator coil 83 is wound around the stator 82. The rotor 81 is coupled to a rotor shaft 88 disposed on an inner side of the rotor 81 in the radial direction, and the rotor 81 and the rotor shaft 88 rotate integrally. In the embodiment, the rotor shaft 88 is a hollow tubular member, and as will be described later, the drive shaft DS (which may be a coupling member as will be described later) penetrates an inner side of the rotor shaft 88 in the radial direction. The rotor shaft 88, the rotor 81, and the drive shaft DS are disposed on the first axis A1. An input gear 89 is integrally formed with the rotor shaft 88. The input gear 89 may be integrally formed of the same member as the rotor shaft 88, or may be formed of a separate member and coupled thereto by welding or the like.

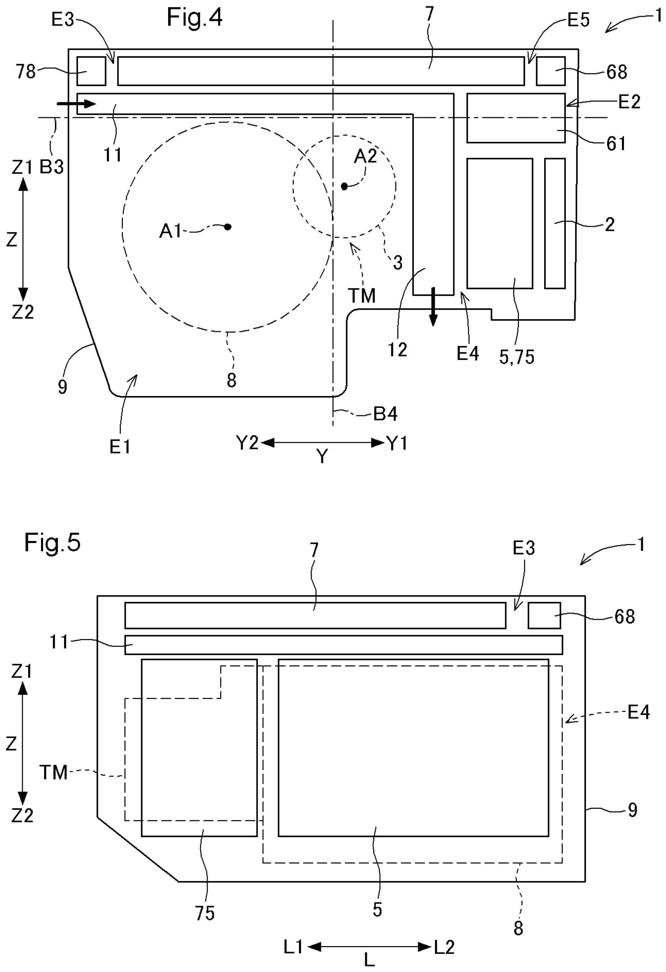

The input gear 89 meshes with a first counter gear 31. The first counter gear 31 rotates integrally with a second counter gear 32 having a diameter smaller than the first counter gear 31. Accordingly, the rotation transmitted from the rotor shaft 88 to the first counter gear 31 via the input gear 89 is decelerated and output from the second counter gear 32. The first counter gear 31 and the second counter gear 32 constitute a counter gear mechanism 3 that functions as a speed reducer. The counter gear mechanism 3 is disposed on a second axis A2 parallel to the first axis A1 and different from the first axis A1. As shown in FIGS. 1 and 4, the second axis A2 is located on the axis-orthogonal direction first side Y1 with respect to the first axis A1. Therefore, the second axis A2 can be referred to as an offset axis offset to the axis-orthogonal direction first side Y1 with respect to the first axis A1 (the rotor axis and an output axis described later). Further, the counter gear mechanism 3 disposed on the second axis A2 (offset axis) can be referred to as an offset gear mechanism. In addition, in the embodiment, the counter gear mechanism 3 is disposed on the axial direction first side L1 with respect to the rotation electric machine 8.

The second counter gear 32 meshes with a differential ring gear 41 that is an input gear (differential input gear) to a differential gear mechanism 4. Although the configuration is known, and the illustration is omitted, the differential gear mechanism 4 is a bevel gear type differential gear mechanism, and includes a differential pinion gear and the differential side gear 44 which are bevel gears. The differential pinion gear is supported by a differential case and is rotatably supported by a pinion shaft disposed to extend along the radial direction. The pinion shaft rotates integrally with the differential case. The differential pinion gear is rotatable around the pinion shaft and revolvable around a rotation axis (here, the first axis A1) of the differential case. A plurality of the pinion shafts are arranged in a radial shape (for example, a cross shape) around the rotation axis of the differential case, and the differential pinion gears are attached to the plurality of pinion shafts, respectively. The differential case accommodates therein the pinion gear, the differential side gear 44, and the pinion shaft. The differential case rotates integrally with the differential ring gear 41.

A pair of differential side gears 44 are disposed separately on the axial direction first side L1 and the axial direction second side L2. The pair of differential side gears 44 mesh with the plurality of pinion gears, respectively, and are disposed to rotate around the rotation axis of the differential case. As shown in FIG. 2, the differential side gear 44 on the axial direction first side L1 is coupled to the drive shaft DS on the axial direction first side L1 and is drivingly coupled to the wheel W on the axial direction first side L1. The differential side gear 44 on the axial direction second side L2 is coupled to the drive shaft DS on the axial direction second side L2 and is drivingly coupled to the wheel W on the axial direction second side L2. Note that since the differential gear mechanism 4 is disposed on the axial direction first side L1 with respect to the rotation electric machine 8, the drive shaft DS on the axial direction second side L2 penetrates the inner side of the hollow tubular rotor shaft 88 in the radial direction and extends to the axial direction second side L2 with respect to the rotation electric machine 8. The drive shaft DS on the axial direction second side L2 may include a member (so-called drive shaft) drivingly coupled to the wheel W and a coupling member coupled to the differential side gear 44 to couple the member and the differential side gear 44.

The differential side gear 44 and the drive shaft DS correspond to an output member in the vehicle drive device 1. In the embodiment, the output axis, which is a rotation axis of the output member, is also the first axis A1. That is, the vehicle drive device 1 according to the embodiment has a two-shaft configuration in which the output axis, which is the rotation axis of the output member, is disposed on the first axis A1 coaxial with the rotor axis, and the offset gear mechanism is disposed on the offset axis (second axis A2) parallel to the first axis A1.

The rotation electric machine 8 functions as a drive force source of a pair of wheels W. As shown in FIG. 3, the rotation electric machine 8 is electrically connected via an inverter 50 to the high-voltage battery BH, which is a DC power supply constituted by a rechargeable secondary battery such as a lithium ion battery or a power storage device such as an electric double-layer capacitor. A first DC link capacitor 61 that functions as a smoothing capacitor for smoothing a voltage of the inverter 50 on the DC side is provided between the high-voltage battery BH and the inverter 50.

The rotation electric machine 8 has a function as a motor (electric motor) that receives electric power supplied from the high-voltage battery BH and generates power, and a function as a generator (electric generator) that receives power supplied from the wheels W and generates electric power. The rotation electric machine 8 generates the drive force by running with the electric power stored in the high-voltage battery BH and generates the power by the drive force transmitted from the pair of wheels W to charge the high-voltage battery BH. A rated voltage of the high-voltage battery BH is about 200 volts to 800 volts.

As described above, the rotation electric machine 8 is a drive force source for the wheels W, and is a so-called traction rotation electric machine. In addition to the traction rotation electric machine, the vehicle may be provided with an auxiliary motor M serving as a drive force source for auxiliary machines such as an air conditioner and an electric oil pump. In a vehicle in the related art in which only an internal combustion engine is used as the drive force source of the wheels W, exhaust heat of the internal combustion engine can be used as a heat source for heating, but in a hybrid vehicle or an electric vehicle, exhaust heat of the internal combustion engine cannot be expected, and a heat pump is often used for heating. Therefore, an output required for the auxiliary motor M that drives a compressor also tends to increase. Further, when the vehicle is stopped (when the wheels are not rotating), the traction rotation electric machine is stopped when the vehicle is stopped, unlike the internal combustion engine that is constantly operating due to idling or the like. In a mechanical oil pump that sucks and discharges oil by power of the internal combustion engine, oil for lubrication or cooling cannot be supplied while the vehicle is stopped, and since the electric oil pump is used, an output required for the auxiliary motor M that drives the pump tends to increase.

In order to cause the auxiliary motor M to output a large drive force, the number of vehicles configured, such that the auxiliary motor M is also supplied with the electric power from the high-voltage battery BH similarly to the traction rotation electric machine, is increasing. Therefore, for example, an auxiliary inverter module 75 for driving the auxiliary motor M is provided. A second DC link capacitor 62 is also provided on the DC side of the auxiliary inverter module 75, that is, on the high-voltage battery BH side, in order to smooth a DC voltage.

On the other hand, an output required for the traction rotation electric machine increases, and the rated voltage of the high-voltage battery BH tends to increase. Therefore, for the auxiliary motor M, the rated voltage of the high-voltage battery BH may be too high. In this case, a voltage conversion circuit that steps down the voltage supplied to the auxiliary inverter module 75, that is, the DC power supplied from the high-voltage battery BH may be provided. The auxiliary inverter module 75 may include a first DC-DC converter as such a voltage conversion circuit. In this case, the second DC link capacitor 62 is provided on the high-voltage battery BH side of the first DC-DC converter.

Note that in the embodiment, the high-voltage battery BH is not only charged by the electric power generated by the rotation electric machine 8, but also can be charged by electric power supplied from an external AC power supply such as a commercial AC power supply having a rated voltage of about 100 volts to 240 volts. Therefore, the high-voltage battery BH is connectable to an external power supply via an onboard charger 70 including a charging circuit. Further, in recent years, it has been proposed to use a battery disposed on an electric vehicle or a hybrid vehicle as an emergency power supply during a disaster or the like. Therefore, in the embodiment, the onboard charger 70 is configured to have a function of a power supply circuit in addition to a function of a charging circuit. Of course, the onboard charger 70 may have only the function of the charging circuit.

The emergency power supply described above is often provided to output AC power to a portion to which the external AC power supply is connected, that is, to the outside of the vehicle. On the other hand, some vehicles include an AC power supply socket for supplying electric power to a general home appliance or the like having low power consumption in a vehicle cabin (including a luggage compartment). A power supply circuit for supplying AC power to such an AC power supply socket may be provided.

The onboard charger 70 according to the embodiment includes a dual active bridge (DAB) circuit including a transformer T, and converts the AC power (AC IN) supplied from the external AC power supply side into first DC power and second DC power. When viewed from the AC side, the transformer T includes a primary coil and two secondary coils. For example, a full bridge circuit including a switching element is connected to the primary coil to form a primary circuit 71. Similarly, a full bridge circuit is connected to a first secondary coil to form a first secondary circuit 72, and a full bridge circuit is connected to a second secondary coil to form a second secondary circuit 73.

The first secondary circuit 72 generates first DC power for charging the high-voltage battery BH. A third DC link capacitor 63 that smooths the voltage of the first DC power is provided in an output portion of the first secondary circuit 72. The second secondary circuit 73 generates second DC power having a voltage lower than the first DC power. A fourth DC link capacitor 64 that smooths the voltage of the second DC power is provided in an output portion of the second secondary circuit 73.

As shown in FIG. 3, the vehicle includes, in addition to the high-voltage battery BH, a low-voltage battery BL having a rated voltage lower than that of the high-voltage battery BH. A rated power supply voltage of the low-voltage battery BL is, for example, about 12 volts to 24 volts. In the vehicle in the related art in which only the internal combustion engine is used as the drive force source for the wheels W, the low-voltage battery BL is charged with electric power generated by an alternator using power of the internal combustion engine. In the vehicle according to the embodiment including the high-voltage battery BH, the low-voltage battery BL can be charged with the electric power supplied from the high-voltage battery BH or the external AC power supply. The low-voltage battery BL can be charged from the high-voltage battery BH via the first secondary circuit 72, the transformer T, and the second secondary circuit 73, and from the external AC power supply via the primary circuit 71, the transformer T, and the second secondary circuit 73. The embodiment exemplifies a form in which a second DC-DC converter 76 is provided as a voltage conversion circuit that further steps down the voltage of the second DC power. Note that the low-voltage battery BL may be, for example, a lead storage battery, similarly to the vehicle in the related art using the internal combustion engine as the drive force source for the wheels W.

In the embodiment, as described above with reference to FIG. 3, since the onboard charger 70 is configured using the transformer T, insulation between the external AC power supply, the high-voltage battery BH, and the low-voltage battery BL can be ensured.

Further, the external AC power supply and the onboard charger 70 are connected via an electro magnetic interference (EMI) filter 79 that reduces EMI noise. Even when the onboard charger 70 functions as a power supply circuit, AC power (AC OUT) is output from the onboard charger 70 via the EMI filter 79. In the embodiment, the power supply module 7 includes the EMI filter 79, the onboard charger 70 (charging circuit, power supply circuit), the auxiliary inverter module 75, and the voltage conversion circuit (the first DC-DC converter and the second DC-DC converter 76). The power supply module 7 electrically connected to the high-voltage battery BH is not limited to this form, and may include at least one of the voltage conversion circuit that performs voltage conversion of the high-voltage battery BH, the charging circuit for charging the high-voltage battery BH from the external power supply, and the power supply circuit for supplying power from the high-voltage battery BH to the outside.

The rotation electric machine 8 is drivingly controlled by a rotation electric machine control unit based on a target torque of the rotation electric machine 8 set according to a command from a vehicle control device (not shown) which is a host control device. The rotation electric machine control unit performs switching control of the inverter 50 implemented by a plurality of switching elements to cause the inverter 50 to convert the electric power between a direct current and a multiple-phase (three phases in the embodiment) alternating current. In the embodiment, the rotation electric machine control unit, together with a charging control unit that controls the onboard charger 70, an auxiliary inverter control unit that controls the auxiliary inverter module 75, a second voltage conversion control unit that controls the second DC-DC converter 76, or the like, is implemented by an ECU 2 (control device). When the first DC-DC converter is provided, the ECU 2 also includes a first voltage conversion control unit that controls the first DC-DC converter.

The inverter 50 includes the plurality of switching elements. The inverter 50 includes a plurality of sets (here, three sets) of arms for one alternating current phase implemented by a series circuit of an upper stage side switching element on a positive electrode side and a lower stage side switching element on a negative electrode side of a direct current. As the switching element, a power transistor such as an insulated gate bipolar transistor (IGBT), a power metal oxide semiconductor field effect transistor (power MOSFET), or a high electron mobility transistor (HEMT) is preferably applied.

The ECU 2 is implemented using a processor such as a microcomputer as a core, and has an operating voltage of 3.3 volts to 5 volts. The voltage applied to the inverter 50 connected to the high-voltage battery BH is several hundred volts, and a voltage of a switching control signal of the power transistor constituting the inverter 50 is about 15 volts to 24 volts. Therefore, a drive circuit, which amplifies the voltage of the switching control signal output from the ECU 2, increases the drive force, and supplies the drive force to the inverter 50, is provided between the ECU 2 and the inverter 50. Although the drive circuit is not shown in FIG. 3, the inverter module 5 including such a drive circuit is formed using the inverter 50 as the core. The inverter module 5 may include a control circuit, other than the drive circuit, and at least a part of the first DC link capacitor 61.

In the embodiment, the inverter module 5 and the power supply module 7 constitute a power circuit assembly PE. As shown in FIG. 3, the inverter module 5 and the power supply module 7 are both connected to the high-voltage battery BH. The inverter module 5 and the power supply module 7, which are both power circuits, may share components such as a connector (not shown in FIG. 3, but indicated by reference numeral "68" in FIGS. 4 and 5 to be referred to later) that connects the high-voltage battery BH and the vehicle drive device 1, and a DC link capacitor (the first DC link capacitor 61 and the third DC link capacitor 63). When the power circuit assembly PE includes the inverter module 5 and the power supply module 7, it is easy to share such components.

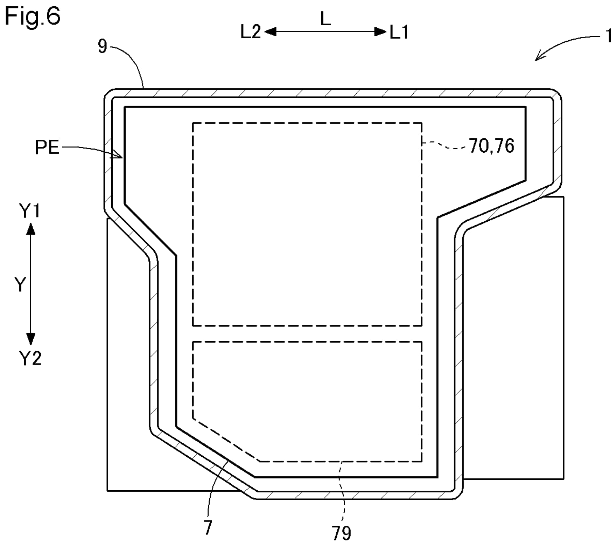

Hereinafter, a form of accommodating the power circuit assembly PE in the case 9 will be described with reference to FIGS. 4 to 6. FIG. 4 schematically shows the arrangement of members including the power circuit assembly PE, when viewed in the axial direction L. FIG. 5 schematically shows the arrangement of the members including the power circuit assembly PE, when viewed in the axis-orthogonal direction Y. FIG. 6 is a schematic top view of the vehicle drive device 1 with the upper cover 94 described later removed.

As described above, the case 9 includes the case body 91, the first side cover 92, the second side cover 93, and the upper cover 94. The accommodation space is formed in the space surrounded by the case body 91, the first side cover 92, the second side cover 93, and the upper cover 94. In the embodiment, as shown in FIG. 1, the accommodation space inside the case 9 includes a first accommodation chamber E1 that accommodates the rotation electric machine 8 and the power transmission mechanism TM, and a second accommodation chamber E2 that accommodates the power circuit assembly PE (the inverter module 5 and the power supply module 7).

Note that the second accommodation chamber E2 may be a space that accommodates at least the inverter module 5. In this case, an accommodation space (for example, a third accommodation space (not shown)) for accommodating the power supply module 7 may be formed outside the case 9. The third accommodation space may be formed in a space partially shared with and surrounded by the case 9 (for example, the case body 91 and the upper cover 94), or may be formed in a second case (not shown) independent of the case 9. When the third accommodation space is formed in an internal space of the second case, it is preferable that the second case is fixed to the case 9 and integrated as the vehicle drive device 1.

The first accommodation chamber E1 and the second accommodation chamber E2 are partitioned by a partition wall. In the first accommodation chamber E1, a region in which the rotation electric machine 8 is accommodated and a region in which the power transmission mechanism is accommodated may be partitioned by a wall in order to support a bearing or the like, but even when the regions are partitioned, the regions partially communicate with each other. In the embodiment, the second accommodation chamber E2 is not partitioned, and the inverter module 5 and the power supply module 7 are accommodated in one chamber, but there may be a wall that partially partitions the second accommodation chamber E2 as long as at least a part of the wall communicates with the second accommodation chamber E2 to ensure a path such as wiring.

In the embodiment, as shown in FIG. 1, the case 9 (the case body 91) has an opening portion 95 that communicates with the second accommodation chamber E2 and that is widely opened toward the upper side Z1 over substantially the entire region of the case 9 in a horizontal direction. An opening direction may be inclined within a range of about 45 degrees with respect to the up-down direction Z (vertical direction). In relation to the second accommodation chamber E2, the opening portion 95 is formed to overlap both a side region E4 and an upper region E3 when viewed in the up-down direction Z. The upper cover 94 (cover member) is a cover member that covers the entire opening portion 95. The upper cover 94 is attached to the case 9 to close the opening portion 95. Since the case 9 has the large opening portion 95 communicating with the second accommodation chamber E2, in a state in which the upper cover 94 is removed, it is possible to perform assembly, maintenance, or the like of both the inverter module 5 and the power supply module 7 with respect to the second accommodation chamber E2. In addition, by attaching one upper cover 94 to the case body 91, the vehicle drive device 1 can be assembled by easily closing the second accommodation chamber E2 in which both the inverter module 5 and the power supply module 7 are accommodated.

As shown in FIGS. 1, 4, 5, or the like, the second accommodation chamber E2 includes the upper region E3 that is a region located on the upper side Z1 with respect to the rotation electric machine 8 and overlapping the rotation electric machine 8 when viewed in the up-down direction Z, in the onboard state of being mounted on the vehicle. For example, the upper region E3 is a region that is on the upper side Z1 with respect to a one-dot chain line "B3" shown in FIG. 4 and overlaps the rotation electric machine 8 when viewed in the up-down direction Z as shown in FIGS. 1, 4, and 5.

Further, the second accommodation chamber E2 includes the side region E4 that is a region on the axis-orthogonal direction first side Y1 with respect to the rotation electric machine 8, that does not overlap the rotation electric machine 8 when viewed in the up-down direction Z, and that overlaps the rotation electric machine 8 when viewed in the axis-orthogonal direction Y. The side region E4 can also be referred to as a region that is on the axis-orthogonal direction first side Y1 with respect to the rotation electric machine 8 in the onboard state, that does not overlap the rotation electric machine 8 when viewed in the up-down direction Z, and that overlaps the counter gear mechanism 3 (offset gear mechanism) when viewed in the axial direction L. For example, the side region E4 is a region that is on the axis-orthogonal direction first side Y1 with respect to a one-dot chain line "B4" shown in FIG. 4 and overlaps the rotation electric machine 8 when viewed in the axis-orthogonal direction Y as shown in FIGS. 1, 4, and 5.

In the embodiment, at least a part of the inverter module 5 is disposed in the side region E4, and at least a part of the power supply module 7 is disposed in the upper region E3. The entire inverter module 5 may be disposed in the side region E4, or a part of the inverter module 5 may be disposed in the side region E4 and the other part may be disposed in the upper region E3. Similarly, the entire power supply module 7 may be disposed in the upper region E3, or a part of the power supply module 7 may be disposed in the upper region E3 and the other part may be disposed in the side region E4.

In the embodiment, the inverter module 5 and the power supply module 7 are accommodated in the common second accommodation chamber E2 with the upper region E3 and the side region E4 as centers. When an accommodation chamber for accommodating the inverter module 5 and an accommodation chamber for accommodating the power supply module 7 are separated from each other, it is necessary to ensure a space of the accommodation chambers according to the sizes of the circuits, and the degree of freedom of the structure of the case 9 is reduced, which may limit the miniaturization of the case 9 and the miniaturization of the vehicle drive device 1. When the circuit is configured according to the size of the accommodation chamber, it may be difficult to ensure the performance required for the circuit, or it may be necessary to form the circuit using expensive components for miniaturization. When the inverter module 5 and the power supply module 7 are accommodated in the common second accommodation chamber E2 as in the embodiment, the degree of freedom in forming the accommodation chamber (the degree of freedom in ensuring the accommodation space) and the degree of freedom in the circuit configuration are also increased.

Note that when the second accommodation chamber E2 is a space for accommodating at least the inverter module 5 as described above, the entire power supply modules 7 excluding the common components (described later) with the inverter module 5 or a part of the power supply module 7 excluding the common components with the inverter module 5 may not be accommodated in the second accommodation chamber E2. Then, in such a case, the second accommodation chamber E2 may include only the side region E4 without including the upper region E3. In this case, it is preferable that at least a part of the power supply module 7 is disposed on the upper side Z1 with respect to the rotation electric machine 8 and at a position overlapping the rotation electric machine 8 when viewed in the up-down direction Z. For example, it is preferable that the above-described third accommodation space (not shown) is formed at a position on the upper side Z1 with respect to the rotation electric machine 8 and overlapping the rotation electric machine 8 when viewed in the up-down direction Z, and at least a part of the power supply module 7 is accommodated in the third accommodation space.

In the embodiment, both the upper region E3 and the side region E4 are provided in the second accommodation chamber E2. Then, as shown in FIG. 1 or the like, the second accommodation chamber E2 also includes a connection region E5 in which the upper region E3 and the side region E4 are connected to each other. The connection region E5 includes a region adjacent to the upper region E3 on the axis-orthogonal direction first side Y1 and a region adjacent to the side region E4 on the upper side Z1.

In the embodiment, since the inverter module 5 and the power supply module 7 are accommodated in one second accommodation chamber E2, as is clear from the circuit block diagram of FIG. 3, it is easy to share components, such as a DC link capacitor and an ECU, between the inverter module 5 and the power supply module 7. Therefore, it is easy to reduce the number of components and the weight of the inverter module 5 and the power supply module 7. In addition, since the inverter module 5 is disposed in the side region E4 and the power supply module 7 is disposed in the upper region E3, it is easy to reduce the size of the vehicle drive device 1 in the up-down direction Z as compared with a configuration in which both the inverter module 5 and the power supply module 7 are disposed in a region located on the upper side Z1 with respect to the rotation electric machine 8, for example.

As shown in FIGS. 4 and 5, in the embodiment, the power supply module 7 is formed in a flat plate shape extending along the axial direction L and the axis-orthogonal direction Y. For example, as shown in FIG. 6, the onboard charger 70 and the second DC-DC converter 76 are disposed on the axis-orthogonal direction first side Y1, and the EMI filter 79 is disposed on the axis-orthogonal direction second side Y2. As shown in FIG. 4, a connector 78 (receptacle) connected to the external AC power supply is disposed on the axis-orthogonal direction second side Y2, and a high-voltage connector 68 (receptacle) connected to the high-voltage battery BH is disposed on the axis-orthogonal direction first side Y1. Note that in FIG. 5, the arrangement of the members is schematically shown in a simplified manner in consideration of complexity, and for example, a first fluid path 11, a second fluid path 12, the first DC link capacitor 61, or the like shown in FIG. 4 are omitted.

Since the power supply module 7 is formed in a flat plate shape, it is possible to shorten a dimension in the up-down direction Z of the upper region E3 in the second accommodation chamber E2, that is, the region on the upper side Z1 with respect to the rotation electric machine 8, and it is easy to miniaturize the vehicle drive device 1 in the up-down direction Z. For example, each circuit constituting the power supply module 7 may be formed on one substrate, or may be formed on a plurality of substrates arranged in parallel.

Further, as described above, the power transmission mechanism TM includes the counter gear mechanism 3 disposed on the second axis A2 located on the axis-orthogonal direction first side Y1 with respect to the first axis A1. The first axis A1 is a main axis of the power transmission mechanism TM in which the rotor shaft 88 and the output member (the differential side gear 44 or the like) are disposed, and the second axis A2 is parallel to the main axis (the first axis A1) and can be referred to as an offset axis offset from the main axis. Then, the counter gear mechanism 3 can be referred to as an offset gear mechanism disposed on the offset axis. As described above, the side region E4 is a region overlapping the offset gear mechanism (the counter gear mechanism 3 in the embodiment) when viewed in the axial direction L.

FIG. 4 shows a form in which members such as the inverter module 5 disposed in the side region E4 do not overlap the counter gear mechanism 3 when viewed in the axial direction L, in consideration of complexity. However, as is clear from the schematic exploded perspective view of FIG. 1, by disposing the counter gear mechanism 3, an empty space is generated on the axis-orthogonal direction first side Y1 with respect to the rotation electric machine 8. Since the side region E4 includes this empty space (so-called dead space), it is possible to ensure a large region, in which members such as the inverter module 5 disposed in the side region E4 can be disposed, while limiting an increase in size of the case 9 and the vehicle drive device 1.

As described above, the inverter module 5 and the power supply module 7, which are both power circuits, can share some components. Here, such a component that can be shared is referred to as a "common component". As shown in FIG. 3, in the embodiment, the DC side of the inverter module 5 and the first secondary circuit 72 of the onboard charger 70 are both DC circuit units electrically connected to the high-voltage battery BH. The first DC link capacitor 61 connected to the DC side of the inverter module 5 and the third DC link capacitor 63 connected to the first secondary circuit 72 are capacitors that smooth the same DC voltage, and may be implemented by the same capacitor. Therefore, the first DC link capacitor 61 and the third DC link capacitor 63 correspond to "common components". Further, the high-voltage connector 68 (see FIGS. 4 and 5) that electrically connects the high-voltage battery BH and the power circuit assembly PE (the inverter module 5 and the power supply module 7) also corresponds to a "common component".

When there are such common components, it is easy to reduce the number of components combining the inverter module 5 and the power supply module 7, and it is easy to reduce the total weight of the components and the arrangement space in the vehicle drive device 1. Further, in the embodiment, such a common component is disposed in the connection region E5 in which the upper region E3 and the side region E4 are connected to each other. When the common component is disposed in the connection region E5, it is easy to appropriately perform both the connection between the common component and the inverter module 5 and the connection between the common component and the power supply module 7, and it is also easy to reduce the wiring space.

As described above, the power circuit assembly PE includes, in addition to the inverter module 5, the auxiliary inverter module 75 for driving the auxiliary motor M. In the embodiment, as shown in FIG. 5, at least a part of the auxiliary inverter module 75 is disposed in the side region E4 to be aligned with the inverter module 5 in the axial direction L. As shown in FIG. 3, the DC side of the inverter module 5 and the DC side of the auxiliary inverter module 75 (when the auxiliary inverter module 75 includes the first DC-DC converter, the high-voltage side of the converter) are both connected to the high-voltage battery BH. That is, the first DC link capacitor 61 and the second DC link capacitor 62 are capacitors that smooth the same DC voltage, and may be implemented by the same capacitor. Therefore, the second DC link capacitor 62 can also be referred to as a "common component". Since the inverter module 5 and the auxiliary inverter module 75 are arranged side by side in the axial direction L in the side region E4, it is easy to share components such as the first DC link capacitor 61 and the second DC link capacitor 62.

Incidentally, when the rotation electric machine 8 is driven, a large current flows through the switching elements implementing the inverter 50, and the switching elements generate heat. Therefore, a heat generation amount of the inverter 50 including the plurality of switching elements is large. Therefore, in many cases, a cooling unit having a fluid path (for example, a cooling water path), through which a fluid (for example, cooling water) for cooling the inverter 50 by heat exchange with the inverter 50 flows, is provided, or a fluid path is formed in the case 9. Further, the power supply module 7 also includes a switching element, and the switching element generates heat during electric power conversion. Therefore, it is preferable that the power supply module 7 can similarly perform heat exchange with the cooling unit and the fluid (cooling water) flowing through the fluid path formed in the case 9. In addition, the DC link capacitor that smooths a DC voltage causing pulsation generates heat by an input and output of the current. Therefore, it is preferable that the DC link capacitors (in particular, the first DC link capacitor 61 and the third DC link capacitor 63 which are connected to the high-voltage battery BH and through which a large current flows) are similarly cooled.

FIG. 4 shows, in the vehicle drive device 1, the first fluid path 11 through which the fluid for heat exchange with the power supply module 7 flows and the second fluid path 12 through which the fluid for heat exchange with the inverter module 5 flows. The first fluid path 11 is disposed along at least the axis-orthogonal direction Y in the upper region E3. Preferably, the first fluid path 11 is formed such that the fluid meanders in a plane along the axis-orthogonal direction Y and the axial direction L and flows from the axis-orthogonal direction second side Y2 to the axis-orthogonal direction first side Y1. Here, a state in which the first fluid path 11 is "along" is not limited to the state in which the first fluid path 11 is parallel to the axis-orthogonal direction Y and the axial direction L, and may have an inclination of substantially 15 degrees or less. The second fluid path 12 is disposed along at least the up-down direction Z in the side region E4. Preferably, the second fluid path 12 is formed such that the fluid meanders in a plane along the up-down direction Z and the axial direction L and flows from the upper side Z1 to the lower side Z2.

Further, in the embodiment, an end portion of the first fluid path 11 on the axis-orthogonal direction first side Y1 and an upper end portion of the second fluid path 12 are connected to each other such that the second fluid path 12 is connected to the first fluid path 11 to be downstream in the flow of the fluid. The "connection" refers to a state in which the fluid can flow between the first fluid path 11 and the second fluid path 12. As shown in FIG. 4, in the embodiment, the fluid is supplied to the first fluid path 11 from the axis-orthogonal direction second side Y2, and the fluid is discharged from the lower side Z2 of the second fluid path 12. Since the fluid for heat exchange (for example, cooling water) can flow substantially from the upper side Z1 toward the lower side Z2 due to gravity, a pressure loss of the fluid can be easily limited to be small.

As shown in FIG. 4, since the first fluid path 11 and the second fluid path 12 are disposed according to the arrangement of the power supply module 7 and the inverter module 5, it is possible to appropriately dispose the fluid path, in which heat exchange between both the power supply module 7 and the inverter module 5 and the fluid is possible, with a simple configuration while limiting an increase in the size of the vehicle drive device 1. In addition, as shown in FIG. 4, the second fluid path 12 can also perform heat exchange with heat generation components other than the inverter module 5, such as the first DC link capacitor 61.

Other embodiments will be described below. Note that the configuration of each embodiment described below is not limited to being applied alone, and can be applied in combination with the configuration of another embodiment as long as no contradiction occurs.

(1) The form of the power transmission mechanism TM from the rotation electric machine 8 to the output member is not limited to the form described above with reference to FIG. 2 or the like. The power transmission mechanism TM is not limited to the form having the mechanism for distributing the drive force to the pair of wheels W as described above, and may be a form in which the drive force is transmitted to only one wheel W. In this case, the output member is, for example, a member (for example, an output shaft) drivingly coupled to the wheel W. Further, the output member is not limited to the two-shaft configuration as described above, and a three-shaft configuration in which the rotor axis and the output axis are separate shafts may be adopted, or a one-shaft configuration in which the speed reducer is not the counter gear mechanism 3 but a planetary gear mechanism may be adopted. In addition, in the above description, the counter gear mechanism 3 disposed on the second axis A2 is exemplified as the offset gear mechanism. However, the offset gear mechanism may be a parallel shaft-type multistage transmission disposed on a plurality of axes, such as a dual clutch transmission (DCT).

(2) When the high-voltage battery BH is charged using the onboard charger 70 and when the AC power is output from the high-voltage battery BH to the outside of the vehicle using the onboard charger 70, the rotation electric machine 8 is stopped and the inverter 50 is also stopped. Therefore, it is also possible to use the inverter 50 for any one of bridge circuits constituting a dual active bridge circuit of the onboard charger 70 and the bridge circuit of the first DC-DC converter. In this case, the inverter 50 is preferably provided in a common component that is preferably disposed in the connection region E5. Similarly, the DC link capacitor can be shared by the onboard charger 70 and the inverter module 5.

As described above, according to the embodiment, the vehicle drive device 1, in which the rotation electric machine 8, the output member, the power transmission mechanism TM, the inverter module 5, and the power supply module 7 are accommodated in the same case 9, can be configured to be smaller.

### [Summary of Embodiment]

Hereinafter, a vehicle drive device (1) described above will be briefly summarized.

As one aspect, a rotation electric machine (8) includes a rotor (81); an output member drivingly coupled to a wheel (W); a power transmission mechanism (TM) configured to transmit a drive force between the rotation electric machine (8) and the output member; an inverter module (5) configured to drivingly control the rotation electric machine (8); a power supply module (7) electrically connected to an onboard battery; and a case (9) that accommodates the rotation electric machine (8) and the power transmission mechanism (TM) are included. A direction along a rotor shaft (88) center that is a rotation axis of the rotor (81) is defined as an axial direction (L), a direction along a vertical direction in an onboard state of being mounted on a vehicle is defined as an up-down direction (Z), a direction orthogonal to the rotor shaft (88) center when viewed in the up-down direction (Z) is defined as an axis-orthogonal direction (Y), and one side of the axis-orthogonal direction (Y) is defined as an axis-orthogonal direction first side (Y1). An output axis that is a rotation axis of the output member is disposed coaxially with the rotor shaft (88) center. The power transmission mechanism (TM) includes an offset gear mechanism disposed on an offset axis located on the axis-orthogonal direction first side (Y1) with respect to the rotor shaft (88) center and the output axis. The case (9) has, in an internal accommodation space, a side region (E4) that is a region on the axis-orthogonal direction first side (Y1) with respect to the rotation electric machine (8) in the onboard state, that does not overlap the rotation electric machine (8) when viewed in the up-down direction (Z), and that overlaps the offset gear mechanism when viewed in the axial direction (L). At least a part of the power supply module (7) is disposed on an upper side (Z1) with respect to the rotation electric machine (8) and at a position overlapping the rotation electric machine (8) when viewed in the up-down direction (Z). At least a part of the inverter module (5) is disposed in the side region (E4).

According to this configuration, the power supply module (7) is disposed on the upper side (Z1) with respect to the rotation electric machine (8), and the inverter module (5) is disposed in the side region (E4) located on the axis-orthogonal direction first side (Y1) with respect to the rotation electric machine (8). That is, compared to a configuration in which both the inverter module (5) and the power supply module (7) are disposed, for example, on the upper side (Z1) with respect to the rotation electric machine (8), it is easy to reduce the size of the vehicle drive device (1) in the up-down direction (Z). Further, the inverter module (5) can be disposed using a dead space that is likely to be generated on the axis-orthogonal direction first side (Y1) with respect to the rotation electric machine (8) by disposing the offset gear mechanism (3). Therefore, it is easy to limit an increase in size of the vehicle drive device (1) due to including the rotation electric machine (8), the output member (44, DS), the power transmission mechanism (TM), the inverter module (5), and the power supply module (7). That is, according to this configuration, the vehicle drive device (1) including the rotation electric machine (8), the output member (44, DS), the power transmission mechanism (TM) that transmits the drive force between the rotation electric machine (8) and the output member (44, DS), the circuit module (5) that drivingly controls the rotation electric machine (8), and the power supply module (7) can be implemented to be smaller.

It is preferable that the accommodation space of the case (9) includes a first accommodation chamber (E1) that accommodates the rotation electric machine (8) and the power transmission mechanism (TM), and a second accommodation chamber (E2) that includes the side region (E4), the second accommodation chamber (E2) further includes an upper region (E3) that is a region on the upper side (Z1) with respect to the rotation electric machine (8) and overlapping the rotation electric machine (8) when viewed in the up-down direction (Z), at least a part of the power supply module (7) is disposed in the upper region (E3), the case (9) has an opening portion (95) that communicates with the second accommodation chamber (E2) and opens toward the upper side (Z1), the opening portion (95) is formed to overlap both the side region (E4) and the upper region (E3) when viewed in the up-down direction (Z), and a cover member that covers the entire opening portion (95) is attached to the case (9) to close the opening portion (95).

According to this configuration, since the power supply module (7) and the inverter module (5), which is a circuit module for drivingly controlling the rotation electric machine (8), are accommodated in one second accommodation chamber (E2), for example, the inverter module (5) and the power supply module (7) can share components. Therefore, it is easy to reduce the number of components and the weight of the inverter module (5) and the power supply module (7). According to this configuration, it is possible to perform assembly, maintenance, or the like of both the inverter module (5) and the power supply module (7) with respect to the second accommodation chamber (E2) in a state in which the cover member (94) is removed. Further, by attaching the cover member (94), it is possible to easily close the second accommodation chamber (E2) in which both the inverter module (5) and the power supply module (7) are accommodated.

In addition, in the vehicle drive device (1), it is preferable that a common component (68, 61) shared by the inverter module (5) and the power supply module (7) is disposed in a connection region (E5) in which the upper region (E3) and the side region (E4) are connected to each other.

When there is a component shared by the inverter module (5) and the power supply module (7), it is easy to reduce the number of components combining the inverter module (5) and the power supply module (7), and it is easy to reduce the total weight of the components and the arrangement space. Further, since such a common component is disposed in the connection region in which the upper region and the side region are connected to each other, it is easy to appropriately perform both the connection between the common component and the inverter module and the connection between the common component and the power supply module, and it is also easy to reduce the wiring space.

Further, it is preferable that, in the vehicle drive device (1), a first fluid path (11), through which a fluid for heat exchange with the power supply module (7) flows, is disposed along the axis-orthogonal direction (Y) in the upper region (E3), a second fluid path (12), through which a fluid for heat exchange with the inverter module (5) flows, is disposed along the up-down direction (Z) in the side region (E4), an end portion of the first fluid path (11) on the axis-orthogonal direction first side (Y1) is connected to an upper end portion of the second fluid path (12), and the second fluid path (12) is connected to the first fluid path (11) to be downstream in a flow of the fluid.

According to this configuration, since the first fluid path (11) and the second fluid path (12) are disposed according to the arrangement of the power supply module (7) and the inverter module (5), it is possible to appropriately dispose the fluid path, in which heat exchange between both the power supply module (7) and the inverter module (5) and the fluid is possible, with a simple configuration while limiting an increase in the size of the vehicle drive device (1). Further, according to this configuration, since the fluid for heat exchange can flow substantially from the upper side (Z1) toward the lower side (Z2), a pressure loss of the fluid can be easily limited to be small.

In addition, in the vehicle drive device (1), it is preferable that the power supply module (7) is formed in a flat plate shape extending along the axial direction (L) and the axis-orthogonal direction (Y).

According to this configuration, it is easy to reduce a dimension of the upper region (E3) in the second accommodation chamber (E2) in the up-down direction (Z), and it is easy to reduce the size of the vehicle drive device (1) in the up-down direction (Z).

In addition, It is preferable that the vehicle drive device (1) further includes an auxiliary inverter module (75) configured to drive an auxiliary motor (M) of the vehicle, in addition to the inverter module (5), in which at least a part of the auxiliary inverter module (75) is disposed in the side region (E4) to be aligned with the inverter module (5) in the axial direction (L).

According to this configuration, since the inverter module (5) and the auxiliary inverter module (75) are accommodated in the side region (E4) in the second accommodation chamber (E2), it is easy to reduce the size of the vehicle drive device (1) including the auxiliary inverter module (75), and it is also easy to share the components of the inverter module (5) and the auxiliary inverter module (75).

### Reference Signs List

1: vehicle drive device
3: counter gear mechanism (offset gear mechanism)
5: inverter module
7: power supply module
8: rotation electric machine
9: case
11: first fluid path
12: second fluid path
44: differential side gear (output member)
50: inverter
61: first DC link capacitor (common component)
62: second DC link capacitor (common component)
63: third DC link capacitor (common component)
68: high-voltage connector (common component)
75: auxiliary inverter module
81: rotor
88: rotor shaft
94: upper cover (cover member covering entire opening portion)
95: opening portion
A1: first axis (rotor axis)
A2: second axis (offset axis)
BH: high-voltage battery (onboard battery)
DS: drive shaft (output member)
E1: first accommodation chamber
E2: second accommodation chamber
E3: upper region
E4: side region
E5: connection region
L: axial direction
M: auxiliary motor
TM: power transmission mechanism
W: wheel
Y: axis-orthogonal direction
Y1: axis-orthogonal direction first side
Z: up-down direction
Z1: upper side

## Claims

1. A vehicle drive device, comprising:
a rotation electric machine including a rotor;
an output member drivingly coupled to a wheel;
a power transmission mechanism configured to transmit a drive force between the rotation electric machine and the output member;
an inverter module configured to drivingly control the rotation electric machine;
a power supply module electrically connected to an onboard battery; and
a case that accommodates the rotation electric machine and the power transmission mechanism, wherein
a direction along a rotor axis that is a rotation axis of the rotor is defined as an axial direction, a direction along a vertical direction in an onboard state of being mounted on a vehicle is defined as an up-down direction, a direction orthogonal to the rotor axis when viewed in the up-down direction is defined as an axis-orthogonal direction, and one side of the axis-orthogonal direction is defined as an axis-orthogonal direction first side,
an output axis that is a rotation axis of the output member is disposed coaxially with the rotor axis,
the power transmission mechanism includes an offset gear mechanism disposed on an offset axis located on the axis-orthogonal direction first side with respect to the rotor axis and the output axis,
the case has, in an internal accommodation space, a side region that is a region on the axis-orthogonal direction first side with respect to the rotation electric machine in the onboard state, that does not overlap the rotation electric machine when viewed in the up-down direction, and that overlaps the offset gear mechanism when viewed in the axial direction,
at least a part of the power supply module is disposed on an upper side with respect to the rotation electric machine and at a position overlapping the rotation electric machine when viewed in the up-down direction, and
at least a part of the inverter module is disposed in the side region.

2. The vehicle drive device according to claim 1, wherein
the accommodation space of the case includes a first accommodation chamber that accommodates the rotation electric machine and the power transmission mechanism, and a second accommodation chamber that includes the side region,
the second accommodation chamber further includes an upper region that is a region on the upper side with respect to the rotation electric machine and overlapping the rotation electric machine when viewed in the up-down direction,
at least a part of the power supply module is disposed in the upper region,
the case has an opening portion that communicates with the second accommodation chamber and opens toward the upper side,
the opening portion is formed to overlap both the side region and the upper region when viewed in the up-down direction, and
a cover member that covers the entire opening portion is attached to the case to close the opening portion.

3. The vehicle drive device according to claim 2, wherein
a common component shared by the inverter module and the power supply module is disposed in a connection region in which the upper region and the side region are connected to each other.

4. The vehicle drive device according to claim 2 or 3, wherein
a first fluid path, through which a fluid for heat exchange with the power supply module flows, is disposed along the axis-orthogonal direction in the upper region,
a second fluid path, through which a fluid for heat exchange with the inverter module flows, is disposed along the up-down direction in the side region,
an end portion of the first fluid path on the axis-orthogonal direction first side is connected to an upper end portion of the second fluid path, and
the second fluid path is connected to the first fluid path to be downstream in a flow of the fluid.

5. The vehicle drive device according to any one of claims 1 to 3, wherein
the power supply module is formed in a flat plate shape extending along the axial direction and the axis-orthogonal direction.

6. The vehicle drive device according to any one of claims 1 to 3, further comprising:
an auxiliary inverter module configured to drive an auxiliary motor of the vehicle, in addition to the inverter module, wherein
at least a part of the auxiliary inverter module is disposed in the side region to be aligned with the inverter module in the axial direction.
